# EUROPEAN PATENT SPECIFICATION

(11) **EP 1 452 438 B1**
(45) Date of publication and mention of the grant of the patent: **27.02.2013**
(21) Application number: 03016004.8
(22) Date of filing: 14.07.2003
(51) Int. Cl.: B62M 11/16

(54) **An internal hub transmission for a bicycle**
Antriebsnabe für ein Fahrrad
Moyeu d'entraînement pour bicyclette

(30) Priority: 28.02.2003 EP 03004518
(43) Date of publication of application: 01.09.2004
(73) Proprietor: SHIMANO INC., Osaka 590-8577 (JP)
(72) Inventor: Itou, Minoru, Toyoura-gun, Yamaguchi 750-0321 (JP)
(74) Representative: Wallinger, Michael

(56) References cited:
- EP-A- 1 211 102
- EP-A2- 0 679 570
- EP-A2- 0 803 431
- EP-A2- 1 258 422
- DE-C- 870 485

## Description

The present invention relates to a hub transmission for a bicycle, also referred to as an internal hub transmission. More particularly, the hub transmission comprises a movable clutch member which is actuated to select the gear speed.

Internal hub transmissions generally comprise a hub axle fixed to a bicycle frame and a hub body rotatable about the hub axle. A planetary gear mechanism is housed within the hub body by which rotational drive force can be communicated to the hub body through various transmission paths defined by the planetary gear mechanism. A clutch mechanism including a clutch member is provided for selecting the transmission path by selected axial movement of the clutch member, for example by a push rod.

A hub transmission of this type is disclosed in EP 1 258 422. Another hub transmission of the above type is disclosed in the European patent application EP 0 876 953, where additional means are provided for facilitating actuation of the clutch member.

In these conventional hub transmissions, the drive member is always in engagement with the clutch member regardless of the gear speed engaged, for example high speed, medium speed or low speed. Thus when backpedaling, the backward rotation of the drive member is always accompanied with backward rotation of the clutch member. Furthermore, when the high speed gear is selected, not only the clutch member but also the planetary gear carrier is also rotated backwardly when back pedaling is performed. Thus, when the clutch member and in some cases parts of the planetary gear mechanism are also rotated backwardly, reverse rotation is not smooth and somewhat heavy.

An object of the present invention is therefore to provide an improved hub transmission, which allows a smooth and light reverse running of the drive member and therefore of the transmission when back pedaling.

The known hub transmission of EP 0 876 953 comprises a drive member adapted to receive one chain sprocket for forward rotational drive of the drive member. In some instances, it is desirable to provide the drive member with an outer periphery having increased axial length, so that more than one chain sprocket can be mounted. However, when the axial extension of the hub increases to accommodate several sprockets on the outer periphery, additional mechanical loads arise in the drive member. The weight of the bicycle rider sitting on the seat is counteracted by the upward forces through the rear wheel. When the axial extension of the hub is larger, a bending moment can be induced in the drive member, which in turn hinders a smooth running of the drive member. In other words, drag or a heavy running of the drive member results.

Therefore, a further object of the present invention is to provide a hub transmission with internal gear changing means, where additionally external speed changing means are present. A still further object of the present invention is to provide reliable mounting means of the drive member in such a combined hub, so as to compensate for the negative effects of added loads on the drive member.

According to the present invention, a hub transmission is provided as defined in claim 1. A drive member is provided to be rotatably mounted around a hub axle. A hub body is also mounted to rotate about the hub axle, where a planetary gear mechanism is provided for communicating forward rotational force from the drive member to the hub body through various force transmission paths. The planetary gear mechanism includes a planet gear supported by a planet gear carrier for rotation around the hub axle, a ring gear engaging the planet gear and a sun gear disposed on the hub axle. A clutch member is provided to be movable in axial direction of the axle. Preferably, a pawl body is arranged between the drive member and the clutch member. A first one-way clutch is preferably arranged to transmit forward rotational drive force from the drive member to the pawl body.

With this embodiment, the drive member always engages the clutch member through the first one-way clutch to transmit forward rotational motion to the clutch member in any one of the selected gear speeds. On the other hand, the first one-way clutch decouples the drive member from the clutch member when reverse rotational motion is applied to the drive member through back pedaling. This is advantageously achieved according to the present invention by providing a pawl body between the drive member and the clutch member, where the first one-way clutch is preferably arranged on the pawl body. Consequently, the drive member runs smoothly and lightly when back pedaling because the internal components of the hub transmission are substantially decoupled from the drive member. A smooth backward running of the hub transmission can therefore be achieved which is nearly as light as for example a freewheel commonly used with a derailleur.

In one embodiment, the clutch member is provided with teeth or a spline on an outer periphery, which is arranged to be slidably engageable with serrations on an inner periphery of the pawl body. In this manner, the clutch member maintains its connection to the pawl body regardless of the axial position of the clutch member.

In a further embodiment, the first one-way clutch comprises at least one pawl mounted on an outer periphery of the pawl body, where complementary ratchet teeth are formed on an inner periphery of the drive member. Preferably, the at least one pawl is pivotally mounted and spring biased so as to engage with the ratchet teeth when forward rotational drive force is applied to the drive member. The ratchet teeth are arranged to disengage from the at least one pawl when reverse rotational drive force is applied to the drive member. Thus, the free reverse rotation of the drive member can be accomplished with relatively simple construction of the pawl body and the associated first one-way clutch.

In a further embodiment, a second one-way clutch is arranged between the pawl body and the ring gear of the planetary gear mechanism for transmitting only forward rotational force to the ring gear. Preferably, the second one-way clutch comprises at least two pawls pivotally mounted on an outer periphery of the pawl body. These pawls are preferably spring biased to engage with complementary ratchet teeth formed on an inner periphery of the ring gear. The arrangement allows a constructively convenient transmission of forward rotational drive force from the drive member through the pawl body to the ring gear, while at the same time reverse rotational drive force is not transmitted to the ring gear.

In another preferred embodiment, a third one-way clutch is provided between the ring gear and the hub body, the third one-way clutch being switchable between a power transmission state in which the third one-way clutch engages ratchet teeth of the hub body and a power interruption state in which the third one-way clutch disengages from the ratchet teeth of the hub body. Preferably, the clutch member comprises a switching portion for switching the third one-way clutch between the power transmission state and power interruption state depending on the axial position of the clutch member.

In a further preferred embodiment, the clutch member is also engageable with the planet gear carrier for defining a transmission path through the clutch member to the planet gear carrier for the high speed transmission path. Preferably, the end of the clutch member opposing the drive member is provided with engaging teeth for engagement with serration teeth on a periphery of the planet gear carrier.

According to the present invention, the outer periphery of the drive member is adapted for mounting at least one sprocket. Preferably, the outer periphery has an axial extension so as to allow mounting of several chain sprockets. In this embodiment, the present hub transmission can be employed in a combination where a drive chain is shifted from one sprocket to another sprocket to provide an external speed change. Also, gear speed change can be undertaken internally in the present hub transmission. Such a combination with a multi-stage sprocket assembly leads to a very versatile speed change apparatus for a bicycle.

An axial portion of the drive member defines an outer periphery which is adapted to support at least one chain sprocket, preferably several chain sprockets. In order to compensate for the increased mechanical loads on the drive member, due to the increased axial length of the hub, first and second bearing assemblies are provided for tight support of the drive member on the hub axle. One of the bearing assemblies is provided with inner and outer races, where the races are press-fit to the hub axle and the interior of the drive member, respectively. This "tight" fit achieved with the bearing assembly effectively accommodates any additional bending moments and consequently avoids drag on the drive member so as to allow its smooth running.

Further advantages of the present invention will become apparent in the following description of embodiments taken in conjunction with the drawings.

Fig. 1 shows an embodiment of the present hub transmission with the clutch member engaged to select the high speed transmission path.

Fig. 2 shows the embodiment of Fig. 1, where the clutch member is axially positioned for engagement of the normal speed transmission path.

Fig. 3 shows the embodiment of Fig. 1, where the clutch member is axially positioned for engagement of the low speed transmission path.

Fig. 4 shows the embodiment of Fig. 1, with a more detailed indication of the features of the drive member.

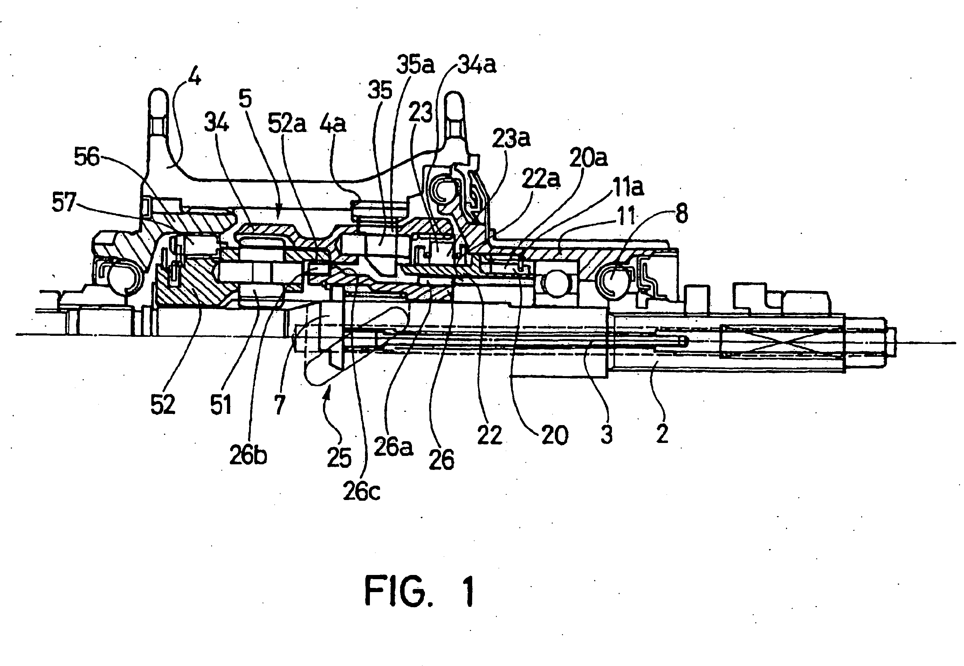

With reference to Fig. 1, an embodiment of the hub transmission is shown with a hub axle 2 adapted to be fixed to the rear drop-out (not shown) of the frame body of a bicycle. A drive member 11 is disposed around and rotatably mounted on the outer periphery at one end of the hub axle 2. A hub body 4 is rotatably mounted to the hub axle 2 and a planetary gear mechanism 5 is housed in the hub body 4. A clutch control mechanism 25 provides means for selecting the power transmission path through axial adjustment of the clutch member 26.

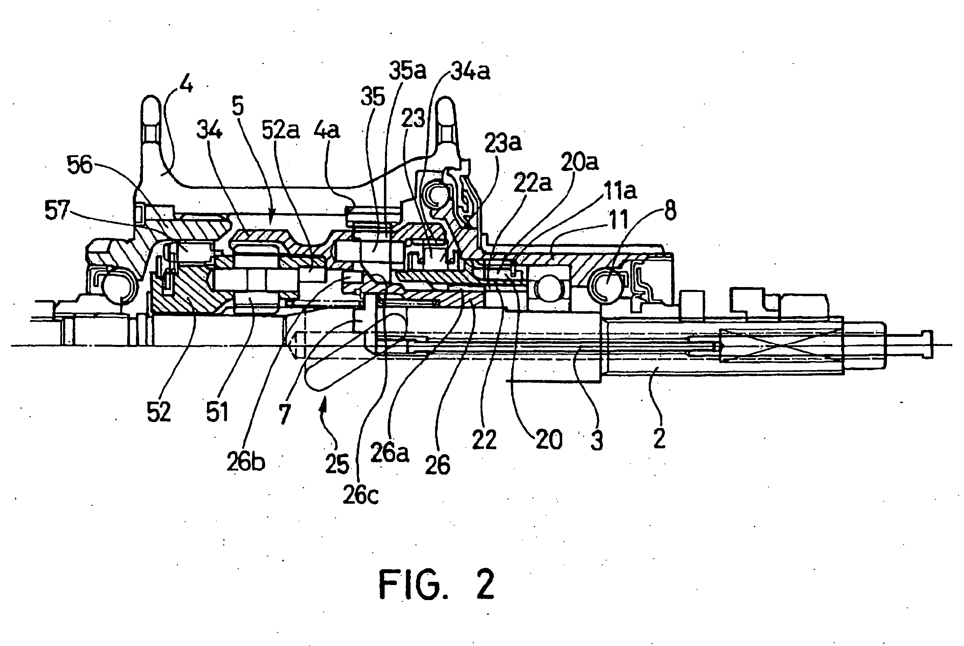

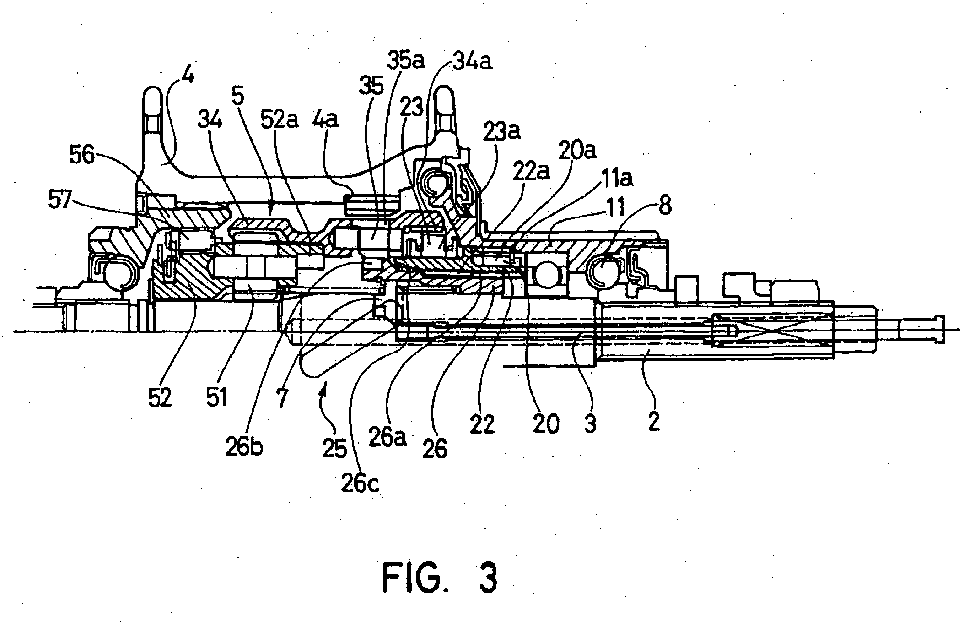

As shown in Fig. 1 as well as in Figs. 2 and 3, the hub axle 2 is a cylinder member with a larger diameter at its center and a smaller diameter at both ends. The center of the axle 2 is provided with a bore for disposition of a control rod 3. The control rod 3 is activated at the right end in Fig. 1 through actuator means controlled by a shift control cable (not shown). Axial movement of the control rod 3 is transmitted through the shift key 7, which extends through an axial groove of the hub axle. The shift key 7 engages with the clutch member 26, whereby the axial positioning of the clutch member 26 for selection of the force transmission path is accomplished.

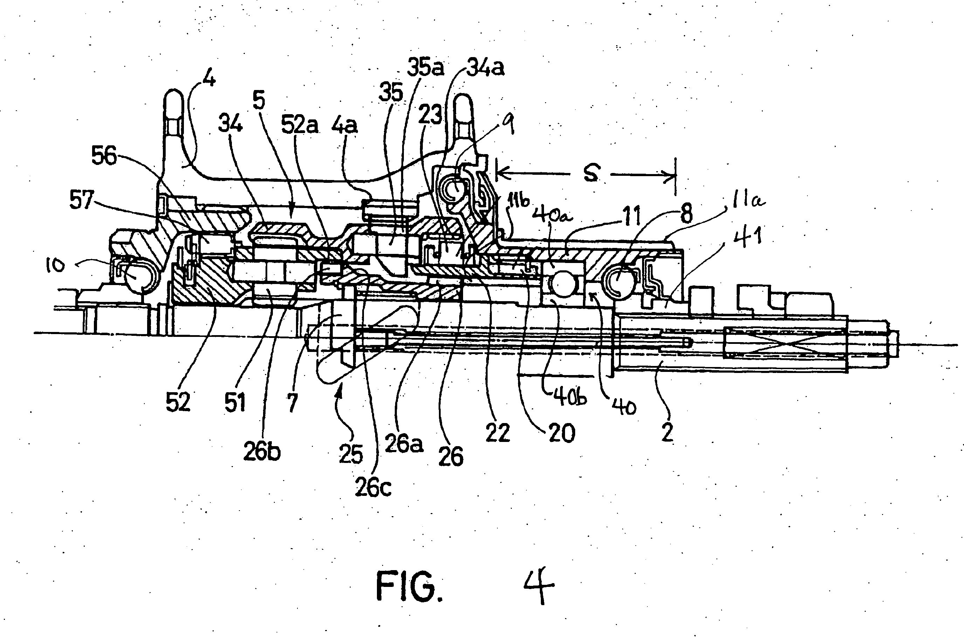

The drive member 11 is rotatably supported on the hub axle 2 by means of a first bearing assembly 8, in this embodiment a ball bearing assembly including the hub cone 41. The hub body 4 is rotatably supported via the bearing 9 on an inner end of the drive member 11 and also by the bearing 10 engaging with a further hub cone mounted on the hub axle 2. In this embodiment, the hub cap 56 is fixed to the hub body 4. As can be seen in Fig. 4, the drive member includes an axial portion S, which defines an outer periphery adapted to support at least one chain sprocket, preferably several sprockets. With increased axial length of the outer periphery, additional support of the drive member 11 on the axle 2 is provided by a second bearing assembly 40, which will be discussed in more detail below.

The planetary gear mechanism 5 comprises a sun gear formed on the hub axle, a planet gear carrier 52 rotatably mounted on the outer periphery of the hub axle 2, and normally three planet gears 51 (only one planet gear is shown in Fig. 1). The planet gears mesh with the sun gear as well as with an inner periphery of a ring gear 34. In addition, the planet gear carrier 52 is provided with serration teeth 52a formed on a periphery, preferably an inner periphery, of the planet gear carrier 52 at an end facing the drive member 11. The serration teeth 52a are provided for engagement with corresponding engaging serration teeth 26b of the clutch member 26, as will be discussed below.

Again referring to Fig. 1, a first one-way clutch 20 is arranged between the drive member 11 and a pawl body 22. The first one-way clutch comprises at least one pawl 20a mounted on an outer periphery of the pawl body 22. One pawl is sufficient for rotational force transmission, however two or more pawls may be provided if desired. The pawls 20a are pivotally mounted on an outer periphery of the pawl body 22 and are spring biased so as to engage with ratchet teeth 11a on an inner periphery of the drive member 11. The ratchet teeth 11a are formed in a manner that forward rotational drive force applied to the drive member 11 is transferred to the pawl body 22, whereas the pawls 20a disengage from the ratchet teeth 11a when reverse rotational force is present on the drive member, for example when back pedaling.

As can be seen in Figs. 1, 2 and 3, the axial position of the pawl body 22 with respect to the drive member 11 remains unchanged for the high speed, normal speed and low speed positions for the hub transmission. In other words, no relative axial movement takes place between the drive member 11 and the pawl body 22.

As a consequence of this arrangement, only forward rotational drive force is transferred from the drive member 11 to the internal elements of the hub transmission, whereas when the drive member is rotated reversely, no or at least substantially no reverse rotational drive force is transmitted. In this manner, an extremely smooth and light running condition is achieved when back pedaling with the present hub transmission. Only the drive member itself runs in reverse, while the clutch member is decoupled from the drive member 11 by means of the one-way clutch 20. In particular in the high speed condition shown in Fig. 1, not only the clutch member is decoupled from the drive member but also the planet gear carrier 51 which is engaged with the clutch member 26. This light running of the drive member is of importance when several chain sprockets are mounted externally on the drive member.

In the present embodiment, a second one-way clutch 23 is arranged between the pawl body 22 and the ring gear 34 as is seen in Fig. 1. The second one-way clutch 23 comprises at least two pawls 23a which are pivotally mounted on an outer periphery of the pawl body 22. The pawls 23a are spring biased to engage with ratchet teeth 34a formed on an inner periphery of the ring gear 34. In this embodiment, two pawls 23a are employed, while in practice four pawls or more may be provided depending on the situation, i.e. depending on the force to be transferred.

As can be seen in Figs. 1, 2 and 3, the ring gear 34 remains fixed in axial direction, while being rotatably mounted about the axle 2. The ring gear 34 extends from a position of the planet gears 51 at one end (left side in Fig. 1) to a position adjacent to the drive member 11 at the other end. At the one end of the ring gear 34, inner peripheral teeth are provided which mesh with the planet gears 51. The ring gear 34 is also provided with a third one-way clutch 35 which comprises at least one clutch pawl 35a, which is biased in the standing or erected position by a coil spring. The clutch pawl or pawls 35a engage with ratchet teeth 4a on an inner periphery of the hub body 4. The clutch pawl 35a meshes with the ratchet teeth 4a when the ring gear is rotated in the forward drive direction. In this third one-way clutch however, the clutch pawl or pawls 35a can be placed in a power transmission state or a power interruption as will be discussed below. In the power transmission state, forward drive rotation is transferred from the ring gear to the pawl 35a and the ratchet teeth 4a to the hub body 4. In the power interruption state, the clutch pawl 35a is knocked down by a switching portion 26c of the clutch member 26 as shown in Fig. 3. In this power interruption state, no forward or reverse rotational drive force can be transmitted to the ratchet teeth 4a of the hub body.

The operation of the hub transmission will now be described according to the present embodiment with three forward speeds. It will however be apparent to the skilled person, that the arrangement of the present one-way clutch between the drive member 11 and the pawl body 22 can be provided in hub transmissions having any number of speeds.

Fig. 1 shows the high speed transmission path. Forward rotational force applied to the drive member 11 is transmitted through the one-way clutch 20 to the pawl body 22 which in turn transmits the force to the clutch member 26 via the serration teeth 26a. The clutch member 26 has been placed by the clutch control mechanism 25 in an axial position to the left in Fig. 1. In this position, the engaging serration teeth 26b of the clutch member engage with the serration teeth 52a on the planet gear carrier 52. Rotation is then transmitted from the planet gear carrier 52 via the planet gear mechanism 5 to the ring gear 34 and subsequently to the third one-way clutch 35 which is in the erected state, i.e. in the power transmission state. Finally, the one-way clutch 35 transfers the forward drive force to the hub body 4.

In this case, the input rotation is increased in speed and then output according to the gear ratio determined by the numbers of teeth on the sun gear, the planet gears 51 and the ring gear 34. In the condition shown in Fig. 1, forward rotation of the drive member 11 is also transmitted to the second one-way clutch 23, however the rotation of the ring gear 34 is faster than that of the drive member 11, so that no rotation is transmitted to the ring gear 34 via the second one-way clutch 23.

The normal speed operating condition is illustrated in Fig. 2. The clutch member 26 is positioned by means of the clutch control mechanism 25 to an intermediate axial position. Forward drive rotation from the drive member 11 is transmitted through the one-way clutch 20 to the pawl body 22 and then through the second one-way clutch 23 directly to the ring gear 34. The third one-way clutch 35 is still in the power transmission state so that the forward rotational drive force of the ring gear 34 is transmitted directly to the hub body 4. In this condition, the forward rotational drive force of the ring gear 34 is also transmitted to the planet gear carrier 52 via the planet gears 51 and from there to a roller 57 which engages the hub cap 56. The hub cap 56 is fixed to the hub body 4 and acts as a further transmission means of rotational force to the hub body 4. However, the rotational speed of the planet gear carrier 52 is reduced by the planet gears 51 so that rotational transmission through the roller 57 and the hub cap 56 is overrun by the faster rotational motion of the third one-way clutch 35.

Fig. 3 illustrates the low-speed transmission path, where the clutch member 26 is now positioned axially to the right hand side in the direction of the drive member 11. In this position, a switching portion 26c of the clutch member 26 has engaged with the clutch pawls 35a to place them in the knocked down state, i.e. the third one-way clutch 35 is in the power interruption state. The forward rotation of the drive member 11 is transmitted through the one-way clutch 20 to the pawl body 22 and from there through the second one-way clutch 23 to the ring gear 34. As mentioned, the one-way clutch 35 is knocked down, so that no rotation is transmitted to the hub body at this position. The forward rotation of the ring gear is then transmitted through the planet gear mechanism 5 to the planet gear carrier 52 and from there through the roller 57 and the hub cap 56 to the hub body 4. The rotation speed of the ring gear 34 is reduced by the planet gears 51 resulting in the low speed transmission condition.

Advantages of the present invention will now be discussed in conjunction with Fig. 4. The outer periphery of the drive member 11 is provided with an axial portion S to accommodate one or more chain sprockets (not shown). Typically, the outer periphery of the drive member is provided with splines so as to engage with corresponding splines of the sprockets. Multi-stage sprocket assemblies are well known in the art and can be provided in the form of so-called sprocket cassettes. In this embodiment, in addition to the gear shifting means of the internal hub transmission, chain shifting means in the form of a derailleur are provided for shifting the chain from one sprocket to another to effect speed changing.

In the embodiment of Fig. 4, with a larger axial portion S capable of carrying several chain sprockets, additional forces are imparted to the drive member which are received by the additional or second bearing assembly 40. For example, when the axial portion S of the drive member 11 is larger, the distance along the hub axle 2 between the points where the axle is attached to the bicycle frame increases. The weight of the cyclist bearing down on the frame at these two points, is countered by the upward force of the wheel transmitted to the hub through the spokes and then to the drive member. This in turn causes a bending moment and a slight deflection to be introduced on the drive member , which can cause the drive member 11 to drag or run less smoothly. Even in the free running condition, with no forward drive power being applied , the drive member runs more heavily.

To avoid this problem the second bearing assembly 40 is provided in this aspect of the present invention, which fixes the drive member 11 to the hub axle over a wider axial range.

Generally, at least two bearing assemblies are provided according to the present invention at axial positions associated with the portion S. In the embodiment of Fig. 4, the first bearing assembly 8 is located in the region of an outer end 11a of the drive member 11, while the second bearing assembly 40 is located axially inwardly of the first bearing assembly 8. The precise positioning of the second bearing assembly 40 will depend on the axial length S itself and consequently on the particular application. In Fig. 4, the drive member 11 is adapted for a 7 or 8 speed sprocket assembly and the second bearing assembly 40 is located at approximately a central region of the axial extension S. The position of the second bearing assembly 40 should still allow space for the first one-way clutch 20 to reliably engage with the pawl body 22.

As illustrated in Fig. 4, the second bearing assembly comprises an inner race 40b mounted on the hub axle 2 and an outer race 40a mounted to the internal periphery of the drive member 11. The inner race 40b is secured to the hub axle as tightly as possible, preferably in a press-fit. This ensures that the possibly torsional and bending moments mentioned above are counteracted as effectively as possible. The outer race 40a is secured to the internal surface of the drive member 11 as tightly as possible, preferably also in a press-fit. In this manner, the negative effects of induced torsion or bending moments can be substantially eliminated. The second bearing assembly 40 will normally be a ball bearing assembly, although other bearing assemblies known in this art are also possible.

The structure of the present hub transmission now allows the drive member 11 to have increased axial extension to accommodate a multi-stage sprocket assembly. The additional twisting and bending forces mentioned above can now be effectively eliminated by the provision of at least two bearing assemblies provided within the axial portion S of the drive member 11. Consequently, a multi-stage sprocket assembly can be combined with the present hub transmission, while still maintaining the smooth running performance of the drive member. The combination of the present hub transmission with the multi-stage sprocket assembly leads to a combined speed change apparatus for a bicycle, which achieves the smooth running characteristics comparable to that of a freewheel assembly.

## Claims

1. A hub transmission for a bicycle comprising:
a drive member (11) and a hub body (4) rotatably mounted around a hub axle (2);
a planetary gear mechanism (5) coupled for communicating rotational force from the drive member (11) to the hub body (4) through various force transmission paths;
a clutch member (26) moveable in axial direction (X) of the hub axle (2) for selecting a respective force transmission path;
wherein an axial portion (S) of said drive member (11) has an a outer periphery adapted to support at least one chain sprocket
**characterized in that**
said drive member (11) is rotatably mounted on said hub axle (2) by first and second bearing assemblies (8, 40), said second bearing assembly (40) comprising an inner race (40b) mounted by press-fit to the hub axle (2) and an outer race (40a) mounted by press-fit to an internal periphery of said drive member (11).

2. The hub transmission according to claim 1, wherein the first and second bearing assemblies (8, 40) are located at axial positions within said axial portion (S).

3. The hub transmission according to claim 1 or 2, wherein said first bearing assembly (8) is located in the region of an outer end (11a) of said axial portion (S) and said second bearing assembly (40) is located axially inward of said first bearing assembly (8).

4. The hub transmission according to claim 3, wherein said second bearing assembly (40) is located at approximately a central region of said axial portion (S).

5. The hub transmission according to one of the claims 1 to 4, further comprising a pawl body (22) arranged between the drive member (11) and the clutch member (26), and
a first one-way clutch (20) arranged to transmit forward rotational drive force from the drive member (11) to the pawl body (22).

6. The hub transmission according to claim 5, wherein the clutch member (26) is provided, at an end towards the drive member (11), with serration teeth (26a) on an outer periphery thereof, so as to be slidably engageable with serration teeth (22a) on an inner periphery of the pawl body (22).

7. The hub transmission according to claim 5 or 6, wherein the first one-way clutch (20) comprises at least one pawl (20a) mounted on an outer periphery of said pawl body (22) and ratchet teeth (11a) formed on an inner periphery of the drive member (11).

8. The hub transmission according to claim 7, wherein said at least one pawl (20a) is pivotally mounted and spring-biased so as to engage with said ratchet teeth (11a) when forward rotational drive force is applied to said drive member (11) and so as to disengage from said ratchet teeth (11a) when reverse rotational drive force is applied to said drive member (11).

9. A speed changing apparatus for a bicycle comprising the hub transmission of any one of the claims 1 to 8 with a multi-stage sprocket assembly mounted on an outer periphery of the drive member (11).

## Patentansprüche

1. Nabenschaltung für ein Fahrrad aufweisend:
ein Antriebselement (11) und ein Nabenkörper (4), welche drehbar um eine Nabenachse (2) gelagert sind;
ein Planetengangmechanismus (5), welcher zum Übertragen von Drehmoment von dem Antriebselement (11) zu dem Nabenkörper (4) über verschiedene Kraft-übertragungspfade gekoppelt ist;
ein Kupplungselement (26), welches in axialer Richtung (X) der Nabenachse (2) zum Auswählen eines jeweiligen Kraftübertragungspfades beweglich ist;
wobei ein axialer Abschnitt (S) des Antriebselements (11) einen äußeren Umfang aufweist, welcher angepasst ist, um zumindest ein Kettenritzel aufzunehmen
**dadurch gekennzeichnet dass**,
das Antriebselement (11) drehbar auf der Nabenachse (2) durch eine erste und eine zweite Lagergruppe (8, 40) gelagert ist, wobei die zweite Lagergruppe (40) einen inneren Laufring (40b) aufweist, welcher durch Einpressung auf der Nabenachse (2) gelagert ist, und einen äußeren Laufring (40a) aufweist, welcher durch Einpressung auf dem inneren Umfang des Antriebselements (11) gelagert ist.

2. Nabenschaltung nach Anspruch 1, wobei die erste und die zweite Lagergruppe (8, 40) sich in axialer Stellung in dem axialen Abschnitt (S) befinden.

3. Nabenschaltung nach Anspruch 1 oder 2, wobei sich die erste Lagergruppe (8) in dem Bereich eines äußeren Endes (11a) des axialen Abschnitts befindet und sich die zweite Lagergruppe (40) axial innerhalb der ersten Lagergruppe (8) befindet.

4. Nabenschaltung nach Anspruch 3, wobei die zweite Lagergruppe (40) ungefähr im zentralen Bereich des axialen Abschnitts (S) angeordnet ist.

5. Nabenschaltung nach einem der Ansprüche 1 bis 4, des Weiteren einen Klauenkörper (22) aufweisend, welcher zwischen dem Antriebselement (11) und dem Kupplungselement (26) angeordnet ist, und eine erste Einwegkupplung (20), welche angeordnet ist, um vorwärts gerichtetes Drehmoment von dem Antriebselement (11) zu dem Klauenkörper (22) zu übertragen.

6. Nabenschaltung nach Anspruch 5, wobei das Kupplungselement (26) an einem Ende zu dem Antriebselement (11) mit einem Verzahnungszahn (26a) auf einem äußeren Umfang davon bereitgestellt wird, um gleitend in die Verzahnungszähne (22a) eines inneren Umfangs des Klauenkörpers (22) eingreifen zu können.

7. Nabenschaltung nach Anspruch 5 oder 6, wobei die erste Einwegkupplung (20) zumindest eine Klaue (20a) aufweist, welche auf einem größeren Umfang des Klauenkörpers (22) angeordnet ist, und Rastungszähne (11a), welche auf einem inneren Umfang des Antriebselements (11) gebildet werden.

8. Nabenschaltung nach Anspruch 7, wobei zumindest eine Klaue (20a) schwenkbar und federvorgespannt gelagert ist, um in die Rastungszähne (11a) einzugreifen, wenn vorwärts gerichtetes Drehmoment auf das Antriebselement (11) ausgeübt wird, und um sich aus den Rastungszähnen (11a) zu lösen, wenn rückwärtsgewandtes Drehmoment auf das Antriebsbauteil (11) ausgeübt wird.

9. Eine Gangswechselvorrichtung für ein Fahrrad, welches eine Nabenschaltung gemäß einem der Ansprüche 1 bis 8 mit einer Mehrstufenritzelgruppe aufweist, welche auf einem äußeren Umfang des Antriebselements (11) gelagert ist.

## Revendications

1. Transmission de moyeu de bicyclette, comprenant:
un élément d'entraînement (11) et un corps de moyeu (4), monté au tour d'une axe de moyeu (2);
un mécanisme de vitesse planétaire (5), couplé pour communiquer un moment de rotation de l'élément d'entraînement (11) au corps de moyeu (4) par plusieurs voies de transmission de force;
un élément d'embrayage (26), mobile en direction axiale (X) de l'axe de moyeu (2) pour choisir une voie de transmission de force respective;
où une portion axiale (S) du membre d'entraînement (11) a un périmètre extérieur adapté à fin de porter un pignon de chaîne
**caractérisé en ce que**,
le membre d'entraînement (11) est monté rotativement sur l'axe de moyeu (2) par un premier et un deuxième module de palier (8, 40), le deuxième module de palier (40) comprenant une bague intérieure (40b), montée par pressage à l'axe de moyeu (2) et une bague extérieure (40a), montée par pressage au périmètre intérieur de l'élément d'entraînement (11).

2. La transmission de moyeu d'après la revendication 1, où le premier et le deuxième module de palier (8, 40) sont situés à la position axiale dans la portion axiale (S).

3. La transmission de moyeu d'après la revendication 1 ou 2, où le premier module de palier (8) est situé dans la région de la fin extérieur (11a) de la portion axiale (S) et le deuxième module de palier (40) est situé axialement à l'intérieur du premier module de palier (8).

4. La transmission de moyeu d'après la revendication 3, où le deuxième module de palier (40) est situé environ à la région centrale de la portion axiale (S).

5. Transmission de moyeu d'après une des revendications 1 à 4, en plus comprenant un corps de cliquet (22) situé entre l'élément d'entraînement (11) et l'élément d'embrayage (26), et un premier embrayage unidirectionnel (20), arrangé à fin de transmettre un moment de rotation en avant de l'élément d'entraînement (11) au corps de cliquet (22).

6. Transmission de moyeu d'après la revendication 5, où l'élément d'embrayage (26) est mise en place à un bout vers l'élément d'entraînement (11) avec une dent d'engrenage (26a) sur un périmètre extérieur, à fin de pouvoir s'engager en glissant avec les dents d'engrenage (22a) d'un périmètre intérieur du corps de cliquet (22).

7. Transmission de moyeu d'après les revendications 5 ou 6, où le premier embrayage unidirectionnel (20) comprend au moins un cliquet (20a) monté au périmètre extérieur du corps du cliquet (22) et des dents d'encliquetage (11a), formées au périmètre intérieur de l'élément d'entraînement (11).

8. Transmission de moyeu d'après la revendication 7, où au moins un cliquet (20a) est monté pivotantement et biasé au ressort à fin de s'engager avec les dents d'encliquetage (11a) si un moment de rotation en avant est appliqué à l'élément d'entraînement (11) et à fin de de s'engager des dents d'encliquetage (11a) si un moment de rotation en arrière est appliqué à l'élément d'entraînement (11).

9. Un appareil de changement de vitesse pour une bicyclette comprenant une transmission de moyeu d'après une des revendications 1 à 8 avec un assemblage de pignon de plusieurs niveaux monté sur un périmètre extérieur du module d'entraînement (11).
